Europäisches Patentamt

European Patent Office

Office européen des brevets

(19)

(11) Veröffentlichungsnummer: **0 194 613**
**A2**

(12) **EUROPÄISCHE PATENTANMELDUNG**

(21) Anmeldenummer: 86103084.9

(22) Anmeldetag: 07.03.86

(51) Int. Cl.⁴: **G 02 B 7/00**

(30) Priorität: 14.03.85 DE 3509131

(43) Veröffentlichungstag der Anmeldung:
17.09.86 Patentblatt 86/38

(84) Benannte Vertragsstaaten:
CH DE FR GB IT LI SE

(71) Anmelder: **Firma Carl Zeiss**

**D-7920 Heidenheim (Brenz)(DE)**

(84) Benannte Vertragsstaaten:
CH DE FR IT LI SE

(71) Anmelder: **CARL-ZEISS-STIFTUNG trading as CARL ZEISS**

**D-7920 Heidenheim (Brenz)(DE)**

(84) Benannte Vertragsstaaten:
**GB**

(72) Erfinder: **Mächler, Meinrad**
**Sulzgasse 2**
**D-7090 Ellwangen(DE)**

(72) Erfinder: **Bittner, Reinhold**
**Friedensstrasse 6**
**D-7074 Mögglingen(DE)**

(72) Erfinder: **Glück Franz**
**Elchweg 27**
**D-7080 Aalen(DE)**

(72) Erfinder: **Sachse, Richard**
**Ulmenweg 21**
**D-7923 Königsbronn(DE)**

(72) Erfinder: **Schlemmer, Harry, Dr. rer. nat.**
**Fichtestrasse 63**
**D-7080 Aalen(DE)**

(54) **Verfahren zur justierten Montage der optischen Bauteile eines optischen Gerätes.**

(57) Für die justierte Montage der optischen Bauteile von optischen Geräten werden die optischen Bauteile in bzw. auf Bauteilformkörpern mit genau definierten Abmessungen entweder justiert und dauerhaft fixiert oder auf diesen Bauteilformkörpern mit genauer Lage und Ausrichtung hergestellt. Anschließend werden die Bauteilformkörper in definierter Weise zusammengesetzt, so daß die optischen Bauteile exakt in die richtige Lage zueinander kommen.

Fig. 2

Croydon Printing Company Ltd.

Beschreibung:

## Verfahren zur justierten Montage der optischen Bauteile eines optischen Gerätes

Die Erfindung betrifft ein Verfahren zur justierten Montage der optischen Bauteile eines optischen Gerätes. Die Erfindung betrifft außerdem ein optisches Gerät zur Durchführung des Verfahrens.

Optische Geräte bestehen aus mehreren optischen Bauteilen, die genau zueinander bzw. zu einem Chassis justiert sein müssen, damit das Gerät die gewünschten Eigenschaften hat. Deswegen sind die optischen Bauteile, wie z.B. bei einem Spektrometer Spalt, Gitter und Empfänger, meist mit justierbaren Haltern auf einem Gerätechassis oder einer ähnlichen Einrichtung angeordnet. Derartige Halter sind je nach der Zahl der Freiheitsgrade, die zum Justieren notwendig sind, in ihrem Aufbau recht aufwendig und damit teuer. Außerdem beanspruchen sie Platz.

Aus der DE-OS 32 11 867 ist bekannt, beim Justieren und Montieren eines optischen Bauteiles in einem optischen Gerät das optische Bauteil von einer nicht zum Gerät gehörenden Justiervorrichtung zu halten und mit dieser zu justieren und es nach dem Justiervorgang mit dem Gerät durch eine flüssige oder pastenförmige Substanz, welche sich mit geringer Volumenänderung verfestigt, zu verbinden und später die Justiervorrichtung zu entfernen. Auf diese Weise wird ein platzsparender Aufbau des optischen Gerätes erreicht und die Halterung der optischen Bauteile ist sehr einfach und damit preiswert.

Ein Nachteil dieses Verfahrens ist, daß die Justiervorrichtungen während des Montage- und Justagevorganges Platz beanspruchen und es daher bei optischen Geräten, die ein sehr kleines Volumen haben, nur noch mit erheblichen Schwierigkeiten oder gar nicht mehr angewendet werden kann. In jüngster Zeit haben aber z.B. Spektrometer, deren Volumen in der Größenordnung von ml oder darunter liegt, zunehmend an Bedeutung gewonnen. Auch bei anderen optischen Geräten ist seit einiger Zeit eine Tendenz zur Miniaturisierung vorhanden. Das gilt besonders bei Multiplexern und Demultiplexern für die faseroptische Nachrichtenübertragung.

Der vorliegenden Erfindung liegt daher die Aufgabe zugrunde, ein Verfahren anzugeben, mit der die Bauelemente eines optischen Gerätes, das
ein Volumen in der Größenordnung von ml oder weniger hat, justiert und
montiert bzw. montiert und justiert werden können. Die Erfindung hat
ferner die Aufgabe, ein optisches Gerät zur Durchführung des Verfahrens
anzugeben.

Die gestellte Aufgabe wird erfindungsgemäß dadurch gelöst, daß die optischen Bauteile in bzw. auf Bauteilformkörpern entweder justiert und
dauerhaft fixiert oder mit genauer Lage und Ausrichtung hergestellt
werden und daß anschließend die Bauteilformkörper in definierter Weise
zusammengesetzt und fixiert werden.

Im Gegensatz zum bekannten Stand der Technik wird also das optische
Gerät aus einzelnen Teilen - hier als Formkörper bezeichnet - zusammengesetzt, welche an den für das Zusammensetzen maßgebenden Kontaktflächen
mit solcher Genauigkeit hergestellt werden, daß sie ohne Spiel formschlüssig zusammenpassen. Diese Formkörper enthalten die optischen Bauteile mit der notwendigen genauen Lage und Ausrichtung in Bezug auf die
für das Zusammensetzen maßgebenden Kontaktflächen.

In einer vorteilhaften Ausgestaltung der Erfindung werden die Bauteilformkörper durch einen oder mehrere Abstandsformkörper miteinander verbunden.

In einer anderen vorteilhaften Ausführungsform der Erfindung werden die
Bauteilformkörper in einen Hohlraumformkörper eingesetzt. Dabei werden
in einer Ausgestaltung die Bauteilformkörper durch ein oder mehrere
Abstandsformkörper in die exakt richtige Lage zueinander innerhalb des
Hohlraumformkörpers gebracht. In einer anderen Ausgestaltung wird der
Hohlraumformkörper durch eine Bodenplatte und eine Deckplatte verschlossen, die zusammen mit dem Hohlraumformkörper die Bauteilformkörper in
der exakt richtigen Lage zueinander aufnehmen. In einer weiteren, besonders vorteilhaften Ausgestaltung werden die Bauteilformkörper innerhalb
des Hohlraumformkörpers durch Justierformkörper in die exakt richtige
Lage zueinander gebracht, wobei die Justierformkörper entfernt werden,
nachdem die Bauteilformkörper am Hohlraumformkörper fixiert sind.

Für die genaue Justierung der optischen Bauteile auf bzw. in den Bauteilformkörpern in Bezug auf die für das Zusammensetzen der Formkörper
maßgebenden Kontaktflächen reicht im allgemeinen als Hilfsmittel ein
Meßmikroskop. Für ein Konkavgitter ist diese Methode jedoch für eine
Reihe von Anwendungsfällen nicht ausreichend. In einer vorteilhaften
Ausgestaltung der Erfindung wird daher ein holographisches Gitter unmittelbar auf dem Bauteilformkörper erzeugt, der unter funktionsgleichen
Bedingungen wie bei der späteren Verwendung zum Eintrittsspalt und zur
Ebene des Empfängers angeordnet ist, wobei der Ort des Eintrittsspaltes
oder ein dazu konjugierter Ort und ein geeigneter Punkt in der Ebene des
Empfängers als Quellpunkte für die Erzeugung des Gitters verwendet werden. Für eine optimale Korrektur kann einer der Quellpunkte auch um
einen kleinen Betrag neben dem Ort des Eintrittsspaltes liegen.

Es ist auch möglich, z.B. den Eintrittsspalt oder Lichtleitfaseranschlüsse unmittelbar in einem Bauteilformkörper herzustellen.

Weitere Ausgestaltungen der Erfindung gehen aus den Unteransprüchen
hervor.

Die Erfindung eignet sich ganz allgemein für optische Geräte. Sie wird
im folgenden anhand von in den Figuren 1 bis 5 mit vergrößertem Maßstab
dargestellten Ausführungsbeispielen für ein Spektrometer und einen Multiplexer/Demultiplexer näher erläutert. Dabei zeigen

Fig. 1     ein erstes Ausführungsbeispiel für ein Spektrometer;

Fig. 2     ein Ausführungsbeispiel für einen Multiplexer/Demultiplexer;

Fig. 3a,b  ein zweites Ausführungsbeispiel für ein Spektrometer;

Fig. 4a,b  ein drittes Ausführungsbeispiel für ein Spektrometer und

Fig. 5a-c  ein viertes Ausführungsbeispiel für ein Spektrometer.

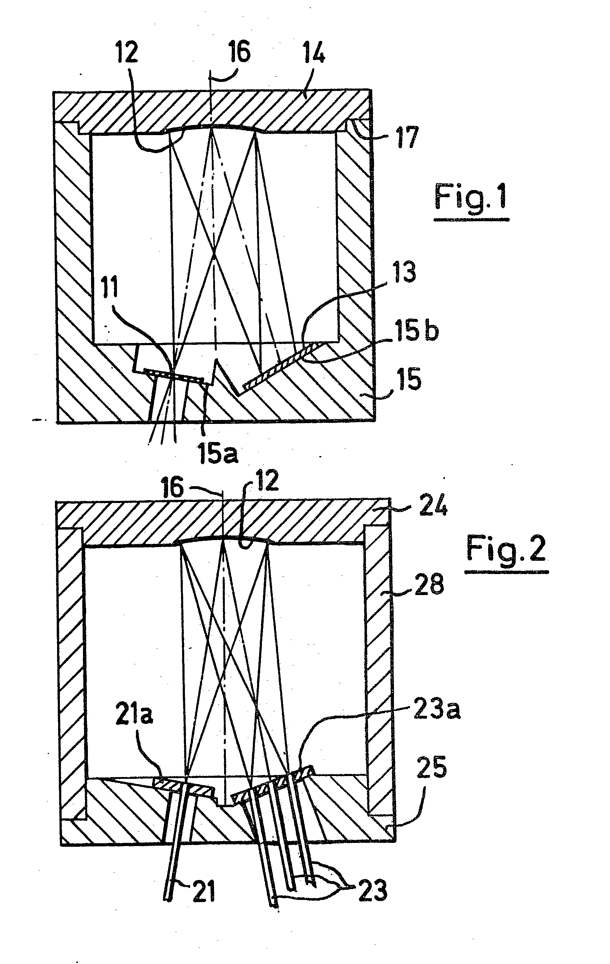

In Figur 1 ist mit 11 ein Eintrittsspalt, mit 12 ein Konkavgitter und
mit 13 eine Diodenzeile bezeichnet. Diese drei optischen Bauteile bilden

eine bekannte Spektrometeranordnung, die sog. Rowlandanordnung. Die drei optischen Bauteile sitzen in zwei Gehäuseteilen 14 und 15, die als Bauteilformkörper bezeichnet werden und die in einer bevorzugten Ausführungsform zylindrische Teile mit der gemeinsamen Achse 16 sind. Die Flächen 15a und 15b für den Spalt 11 und den Empfänger 13 können bei Drehteilen mit einem Fingerfräser hergestellt werden. Die Formkörper können jedoch ebenso wie alle später beschriebenen Formkörper z.B. auch als Spritz- oder Preßgußteile aus geeigneten Materialien, wie z.B. Kunststoff oder Metall, oder auch aus Glas oder Keramik, insbesondere verdichteter Keramik hergestellt werden.

Durch die Stufe 17 lassen sich die Bauteilformkörper 14 und 15 exakt fluchtend zusammensetzen, wobei auch eine Sicherung gegen Verdrehung um die Achse 16 in bekannter Weise möglich ist. Die Justierung und dauerhafte Fixierung der optischen Bauteile oder deren Herstellung mit genauer Lage und Ausrichtung in bzw. auf den Bauteilformkörpern wird später beschrieben.

Figur 2 zeigt eine etwas abgeänderte Ausführungsform des Aufbaus aus Formkörpern, bei dem außerdem der Spalt durch eine Eingangslichtleitfaser 21 und der Empfänger durch mehrere Ausgangslichtleitfasern 23 ersetzt sind, wie das von Multiplexern und Demultiplexern für die faseroptische Nachrichtentechnik bekannt ist. Die optischen Bauteile 21, 12 und 23 sitzen hier in zwei Bauteilformkörpern 24 und 25, welche durch den Abstandsformkörper 28 verbunden werden. Die drei Formkörper 24, 25, 28 haben eine gemeinsame Achse 16 und lassen sich ebenfalls z.B. als Drehteile preiswert mit hoher Genauigkeit herstellen. Gegenüber der in Figur 1 dargestellten Ausführungsform ist der Bauteilformkörper 25 flach und bietet daher für die Justierung und Fixierung oder Herstellung der optischen Bauteile Vorteile.

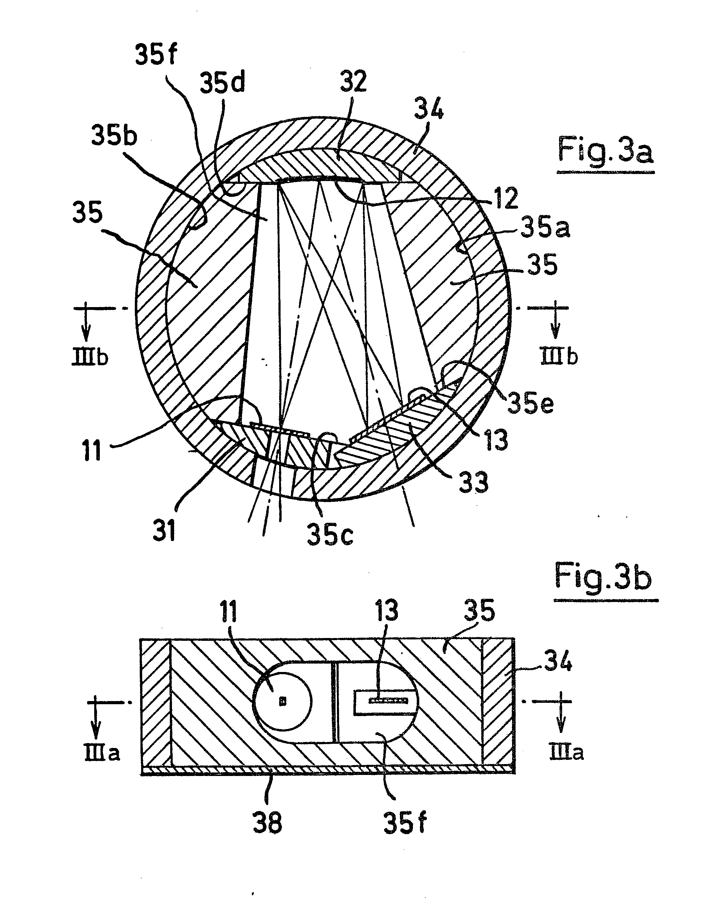

In Figur 3 ist eine weitere Ausführungsform dargestellt. Hier sitzen die optischen Bauteile 11, 12 und 13 auf zylindersegmentförmigen Bauteilformkörpern 31, 32 und 33, welche in dem zylinderförmigen Hohlraumformkörper 34 angeordnet sind. Dabei füllen sie diesen zusammen mit dem Abstandsformkörper 35 derart aus, daß die Bauteilformkörper 31, 32 und 33 nur in genau definierte Lagen kommen können. Hierfür besteht der

Abstandsformkörper 35 an seinem äußeren Umfang aus den Zylinderflächen 35a und 35b und den Segmentflächen 35c, 35d und 35e. Selbstverständlich hat der Abstandsformkörper 35 innen eine genügend große Aussparung 35f für den Strahlengang des Spektrometers. Alle Formkörper sitzen auf der Grundplatte 38 auf, welche in dem in Figur 3b gezeigten Schnitt dargestellt ist, so daß die Bauteilformkörper 31, 32 und 33 auch exakt in die richtige Höhe zueinander kommen.

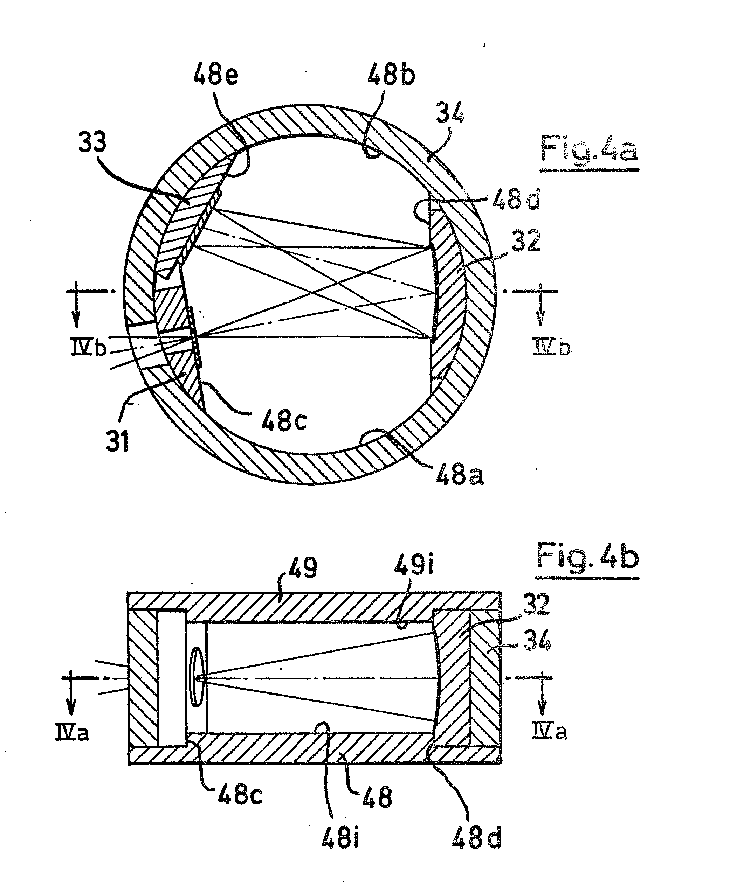

In Figur 4 ist eine ähnliche Ausführungsform dargestellt, bei welcher der Abstandsformkörper 35 von Figur 3 dadurch überflüssig wird, daß die Bodenplatte 48 und eine Deckplatte 49 seine Funktion mit übernehmen. Sie haben dazu jeweils auf der Innenseite 48i bzw. 49i einen stufenartigen Teil, welcher durch die Zylinderflächen 48a und 48b und durch die Segmentflächen 48c, 48d und 48e begrenzt wird. Beim Zusammenbau wird zunächst das Hohlraumformteil 34 auf die Grundplatte 48 gesetzt, dann werden die Bauteilformteile 31, 32 und 33 eingesetzt und schließlich wird die Deckplatte 49 aufgesetzt. Bodenplatte 48 und Deckplatte 49 können auf bekannte Art zusammengepreßt und gegebenenfalls an dem Hohlraumformkörper 34 fixiert werden. Wenn - wie in den Figuren 3 und 4 gezeichnet - die Bauteilformkörper 31, 32 und 33 an beiden Seiten eine geringe Segmenthöhe haben als an einer beliebigen Stelle dazwischen, dann sitzen sie in der beschriebenen Weise ebenso wie in Figur 3 unverrückbar fest.

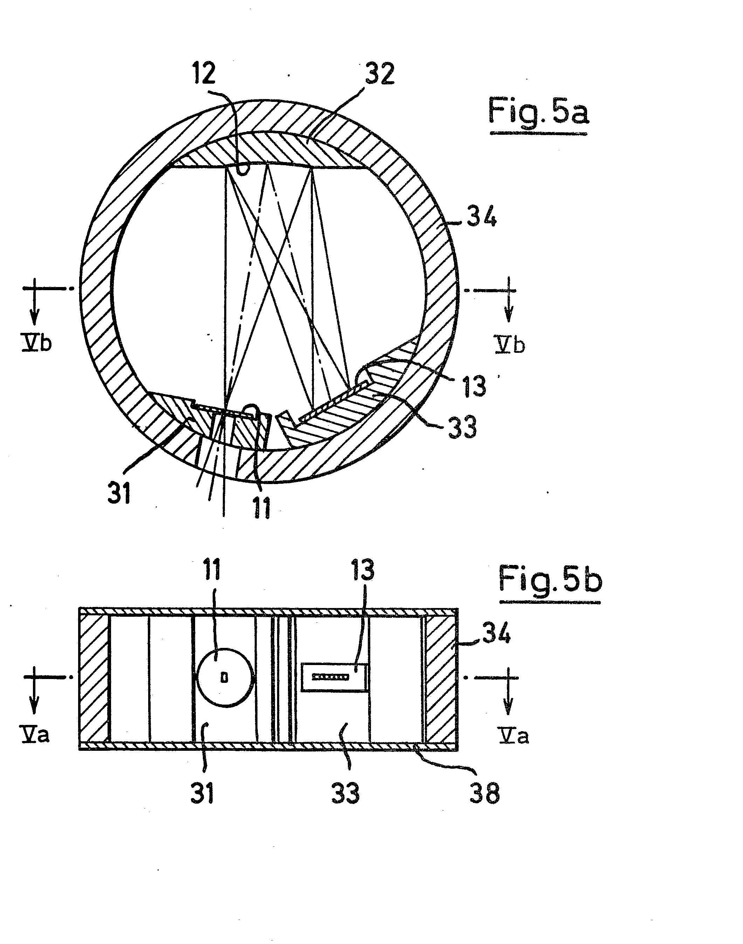

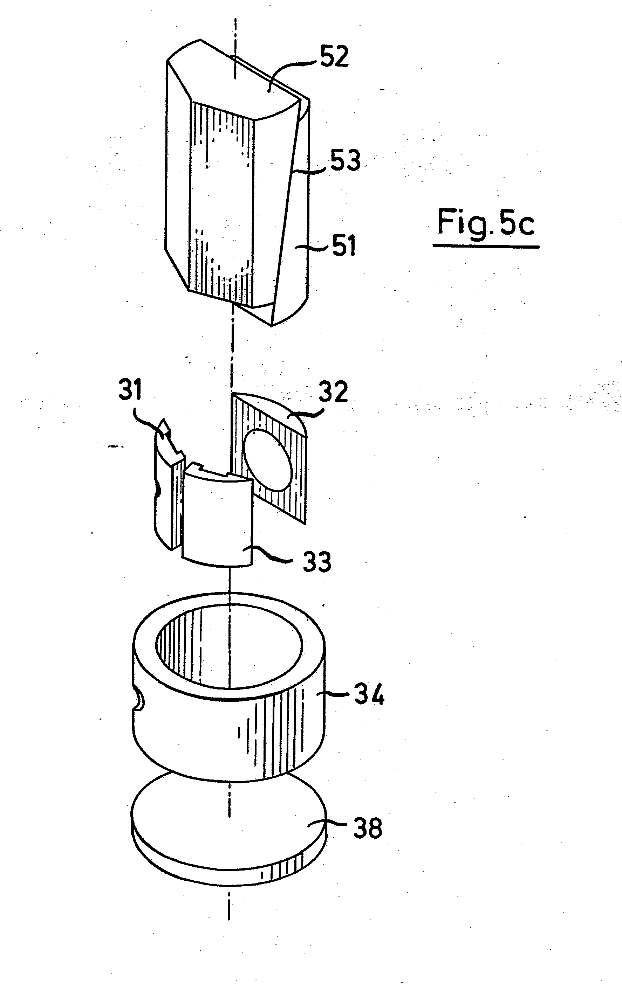

Figur 5 zeigt eine besonders vorteilhafte Ausführungsform, bei der die Bauteilformkörper durch Justierformkörper in die exakt richtige Lage zueinander gebracht werden. Dies ist in Figur 5c in einer Explosionszeichnung dargestellt. Mit 31, 32 und 33 sind wieder die Bauelementformkörper bezeichnet und mit 34 der zylinderförmige Hohlraumformkörper. Letzterer wird mindestens während des Justiervorganges für die Bauteilformkörper auf die Bodenplatte 38 aufgesetzt. Anschließend werden die Bauteilformkörper 31, 32 und 33 in den Hohlraumformkörper ungefähr an die richtigen Stellen eingesetzt. Danach wird zunächst der Justierformkörper 51 und schließlich der Justierformkörper 52 in den Hohlraumformkörper 34 eingesetzt. Die beiden Justierformkörper haben korrespondierende Keilflächen 53, auf denen sie gegeneinander verschiebbar sind. Der zweite Justierformkörper 52 wird daher nach dem Einsetzen so weit wie

6

möglich nach unten gedrückt. Dadurch erhalten die drei Bauteilformkörper exakt die richtige Lage zueinander. Bei dieser Ausführungsform müssen natürlich die optischen Bauteile 11, 12 und 13 versenkt in den Bauteilformkörpern 31, 32 und 33 angeordnet sein.

Die Fixierung der Bauteilformkörper am Hohlraumformkörper kann z.B. mit den in der DE-OS 32 11 867 angegebenen Verbindungstechniken erfolgen. Es ist auch möglich, an den Zylinderflächen der Bauteilformkörper (nicht gezeichnete) kleine Kanäle oder kleine Planflächen von oben nach unten vorzusehen. In die dadurch entstehenden Spalte zwischen Hohlraumformkörper und Bauteilformkörpern (welche so ausgebildet werden können, daß sie die einwandfreie Anlage nicht beeinflussen) kann dann ein Klebemittel, wie z.B. IS 420 der Fa. Loctite eingebracht werden, das nach dem Aushärten für eine dauerhafte Verbindung sorgt. Nach der Fixierung der Bauteilformkörper am Hohlraumformkörper werden die Justierformkörper wieder entfernt.

Bei den in den Figuren 1 bis 4 dargestellten Ausführungsbeispielen ist das normale Zusammensetzen ausreichend. Der Zusammenhalt der Formteile untereinander kann auf bekannte Weise durch Zusammendrücken in Richtung der Achse 16 oder durch andere bekannte Verbindungstechniken erfolgen.

Damit die optischen Bauteile durch das Zusammensetzen der Formteile exakt in die richtige Lage kommen, müssen sie vorher exakt zu den für das Zusammensetzen maßgebenden Flächen justiert und fixiert werden bzw. auf den Bauteilformteilen mit genauer Lage und Ausrichtung hergestellt werden. Bei dem Spalt 11, dem Empfänger 13 und den Lichtleitfasern 21, 23 sind die Anforderungen an die Genauigkeit der Justierung so, daß zum Justieren bekannte Meßmikroskope ausreichen.

Es ist zweckmäßig, die freie Öffnung des Spaltes in einem dünnen Blech vorzusehen und dieses Blech dann auf dem Bauteilformkörper zu justieren. Anschließend kann das Blech auf bekannte Weise fixiert werden, z.B. durch einige Tropfen eines geeigneten Klebers an seinem Rand. Auf die gleiche Weise wird der Empfänger 13, z.B. eine Diodenzeile, auf dem entsprechenden Bauteilformkörper justiert und fixiert.

Bei Spektrometern wird die zu untersuchende Strahlung häufig durch eine Lichtleitfaser zugeführt; bei Multiplexern und Demultiplexern für die faseroptische Nachrichtentechnik erfolgen Zu- und Abführung der Strahlung über Lichtleitfasern. Die Befestigung und Justierung der Lichtleitfasern erfolgt dann zweckmäßig auf folgende Weise: In eine ötzbare Glasplatte (21a oder 23a in Figur 2, z.B. aus Foturan der Fa. Schott) mit geeigneten Abmessungen werden ein oder mehrere Bohrungen mit passendem Durchmesser nach entsprechender Belichtung eingeötzt. In diese Bohrungen werden die Lichtleitfasern eingekittet und anschließend werden ihre Enden mit der der Glasplatte bündig abgeschliffen, wobei die Glasplatte ihre Solldicke erhölt. Schließlich wird die Glasplatte mit der Lichtleitfaser 21 bzw. den Lichtleitfasern 23 unter einem Meßmikroskop auf dem Bauteilformkörper z.B. 23 justiert und fixiert.

Für das Konkavgitter ist die Justierung mit einem Meßmikroskop für eine Reihe von Anwendungsfällen nicht ausreichend, da hier eine sehr genaue Ausrichtung notwendig ist. In diesen Fällen kann ein Verfahren verwendet werden, welches die Tatsache ausnutzt, daß bei der Herstellung von holographischen Konkavgitteroriginalen geringere Toleranzen und Kosten anfallen als bei der Herstellung von Kopien. Die Fläche eines Bauteilformkörpers, welcher das Konkavgitter erhalten soll, läßt sich mit bekannter Technik als Kugelfläche mit der notwendigen Genauigkeit herstellen. Dies gilt auch für die Orientierung dieser Kugelfläche zu den anderen Flächen, die für das Zusammensetzen mit den übrigen Formkörpern maßgebend sind.

Auf die für das Konkavgitter vorgesehene Kugelfläche wird dann in bekannter Technik die zur Herstellung des Gitters notwendige Photoschicht aufgebracht. Die Belichtung dieser Photoschicht erfolgt in einer funktionsgleichen Anordnung wie bei der späteren Verwendung des Konkavgitters. Bei dieser Anordnung wird lediglich der Spalt – falls er nicht kreisförmig ist und den richtigen Durchmesser hat – durch eine kreisförmige Blende von z.B. 5 μm Durchmesser ersetzt. Auch der Empfänger wird durch eine kreisförmige Blende an einem berechneten Ort ersetzt. (Die genaue Lage ergibt sich aus einer Optimierungsrechnung für den jeweiligen Verwendungszweck des Spektrometers.) Die beiden kreisförmigen Blen-

**0194613**

den werden als Quellpunkte für die in bekannter Weise durchgeführte Herstellung des holographischen Gitters verwendet. Auf diese Weise wird auf dem Bauteilformkörper ein Gitter erzeugt, das exakt die richtige Lage und Ausrichtung hat.

Als Material für die Formkörper kommen alle Werkstoffe in Betracht, die sich mit ausreichender Genauigkeit bearbeiten oder herstellen lassen, also z.B. Metall, Kunststoffe, Glas oder Keramik, insbesondere verdichtete Keramik. Dabei haben Keramik, Glas und Kunststoffe den Vorteil, daß kein Korrosionsschutz notwendig ist. Glas und Keramik erlauben Oberflächengüten, die sich mit Metall nicht erreichen lassen. Kunststoffe sind als Spritzguß- oder Preßteile besonders für große Stückzahlen geeignet, wenn es nicht auf höchste Genauigkeit ankommt.

Es ist zweckmäßig, den einzelnen Formkörpern solche Formen zu geben, daß sie mit hoher Genauigkeit in den entscheidenden Abmessungen verhältnismäßig preiswert hergestellt werden können. Das ist besonders bei dem Hohlraumformkörper 34 und bei den zylindersegmentförmigen Bauteilformkörpern 31, 32 und 33 der Fall, es gilt aber auch für die in den anderen Figuren gezeigten Formkörper.

Die beschriebene Erfindung eignet sich sowohl für die Herstellung von einzelnen optischen Geräten als auch für die Herstellung von großen Stückzahlen.

Patentansprüche:

1. Verfahren zur justierten Montage der optischen Bauteile eines optischen Gerätes, dadurch gekennzeichnet, daß die optischen Bauteile (11, 12, 13, 21, 23) in bzw. auf Bauteilformkörpern (14, 15, 24, 25, 31, 32, 33) entweder justiert und dauerhaft fixiert oder mit genauer Lage und Ausrichtung hergestellt werden und daß anschließend die Bauteilformkörper (14, 15, 24, 25, 31, 32 33) in definierter Weise zusammengesetzt und fixiert werden.

2. Verfahren nach Anspruch 1, dadurch gekennzeichnet, daß die Bauteilformkörper (24, 25) mit einem oder mehreren Abstandsformkörpern (28) zusammengesetzt und fixiert werden.

3. Verfahren nach Anspruch 1, dadurch gekennzeichnet, daß die Bauteilformkörper (31, 32, 33) in einen Hohlraumformkörper (34, 48, 49) mit oder ohne Abstandsformkörper (35) eingesetzt werden, wobei jeder Bauteilformkörper (31, 32, 33) in eine definierte Lage kommt.

4. Verfahren nach Anspruch 1, dadurch gekennzeichnet, daß die Bauteilformkörper (31, 32, 33) mit Justierformkörpern (51, 52) in einen Hohlraumformkörper (34) eingesetzt werden und daß die Justierformkörper (51, 52) entfernt werden, nachdem die Bauteilformkörper (31, 32, 33) am Hohlraumformkörper (34) fixiert sind.

5. Verfahren nach einem der Ansprüche 1 bis 4, dadurch gekennzeichnet, daß ein holographisches Gitter (12) auf einem Bauteilformkörper (14, 24, 32) erzeugt wird, der unter exakt gleichen geometrischen Bedingungen wie bei der späteren Verwendung zum Eintrittsspalt (11) und zur Ebene des Empfängers (13) angeordnet ist, wobei näherungsweise der Ort des Eintrittsspaltes oder ein dazu konjugierter Ort und ein geeigneter Punkt in der Ebene des Empfängers als Quellpunkte für die Erzeugung des Gitters (12) verwendet werden.

6. Optisches Gerät zur Durchführung des Verfahrens nach einem der Ansprüche 1, 2 oder 5, dadurch gekennzeichnet, daß das optische Gerät aus Formkörpern (14, 15, 24, 25, 28) aufgebaut ist, die mit maßgenauer Zuordnung zueinander formschlüssig zusammengesetzt sind, und daß vor dem Zusammensetzen die Justierung und Fixierung oder Herstellung der optischen Bauteile (11, 12, 13, 21, 23) in bzw. auf den Bauteilformkörpern (14, 15, 24, 25) unter Bezug auf die für das formschlüssige Zusammensetzen maßgebenden Flächen, Kanten etc. der Bauteilformkörper erfolgt ist.

7. Optisches Gerät zur Durchführung des Verfahrens nach Anspruch 3 oder 5, dadurch gekennzeichnet, daß das optische Gerät aus einem Hohlraumformkörper (34, 48, 49) aufgebaut ist, in den die Bauteilformkörper (31, 32, 33) mit oder ohne Abstandsformkörper (35) formschlüssig einsetzbar sind, und daß vor dem Einsetzen die Justierung und Fixierung oder Herstellung der optischen Bauteile (11, 12, 13) in bzw. auf den Bauteilformkörpern (31, 32, 33) unter Bezug auf die für das formschlüssige Einsetzen maßgebenden Flächen, Kanten etc. der Bauteilformkörper erfolgt ist.

8. Optisches Gerät zur Durchführung des Verfahrens nach Anspruch 4 oder 5, dadurch gekennzeichnet, daß das optische Gerät aus einem Hohlraumformkörper (34) aufgebaut ist, in den die Bauteilformkörper (31, 32, 33) und die Justierformkörper (51, 52) formschlüssig einsetzbar sind, und daß vor dem Einsetzen die Justierung und Fixierung oder Herstellung der optischen Bauteile (11, 12, 13) in bzw. auf den Bauteilformkörpern (31, 32, 33) unter Bezug auf die für das formschlüssige Einsetzen maßgebenden Flächen, Kanten etc. der Bauteilformkörper erfolgt ist.

9. Optisches Gerät nach Anspruch 8, dadurch gekennzeichnet, daß durch mindestens zwei keilförmige Formkörper, von denen höchstens einer ein Bauteilformkörper (31, 32, 33) und mindestens einer ein Justierformkörper (51, 52) ist, die Bauteilformkörper (31, 32, 33) fest an den Hohlraumformkörper (34) andrückbar sind.

10. Optisches Gerät nach einem der Ansprüche 6 bis 9, dadurch gekennzeichnet, daß eine oder mehrere Lichtleitfasern mit Hilfe einer justierbaren Glasplatte (21a, 23a) angeschlossen sind, wobei die Lichtleitfasern (21, 23) in Bohrungen in der Glasplatte eingekittet sind und die freie Oberfläche der Glasplatte zusammen mit den Enden der Lichtleitfasern bündig poliert ist.

.11. Optisches Gerät nach einem der Ansprüche 6 bis 11, dadurch gekennzeichnet, daß die Formkörper aus Metall, Kunststoff, Glas, Keramik oder verdichteter Keramik sind.

0194613

Fig.1

Fig.2

Fig.3a

Fig.3b

0194613

Fig.4a

Fig.4b

Fig.5a

Fig.5b

Fig.5c